# EUROPEAN PATENT APPLICATION

(11) **EP 4 372 302 A1**
(43) Date of publication of application: **22.05.2024**
(21) Application number: 22841935.4
(22) Date of filing: 28.06.2022
(51) Int. Cl.: F28D 7/10, F28F 27/00, F28D 15/02

(54) **HEAT STORAGE HEAT EXCHANGER**

(30) Priority: 15.07.2021 JP 2021116962
(71) Applicant: Eagle Industry Co., Ltd., Minato-ku Tokyo 105-8587 (JP); NOK Corporation, Minato-ku Tokyo 105-8585 (JP)
(72) Inventor: IWA, Toshiaki, Tokyo 105-8587 (JP); KAJIYA, Atsushi, Fujisawa-shi, Kanagawa 251-0042 (JP); OGAWA, Noriyuki, Tokyo 105-8587 (JP); TAKAZAWA, Masato, Tokyo 105-8587 (JP)
(74) Representative: WSL Patentanwälte Partnerschaft mbB
(86) International application number: PCT/JP2022/025795
(87) International publication number: WO 2023/286591

(57) **Abstract**

Provided is a thermal storage heat exchanger capable of keeping a heat medium warm for a long time and having a compact structure. In a thermal storage heat exchanger 1 for warming or cooling a heat medium H1 in a first pipe 11 by exchanging heat between the first pipe 11 forming a part of the first fluid circuit 2 and a second pipe 12 forming a part of the second fluid circuit 3, the first pipe 11 and the second pipe 12 have a nested structure and the thermal storage heat exchanger includes a first upstream valve 14 configured for opening and closing an inlet port 11a of the first pipe 11 and a first downstream valve 15 configured for opening and closing an outlet port 11b of the first pipe 11.

## Description

### {TECHNICAL FIELD}

The present invention relates to a thermal storage heat exchanger, for example, a thermal storage heat exchanger for exchanging heat between a plurality of fluid circuits.

### {BACKGROUND ART}

In various industrial fields, a fluid circuit is used in which a fluid supply source and a load such as a fluid actuator and a heat exchanger are connected in a circular shape by a flow path. Depending on the load, startability deteriorates when the outside air temperature is high or low. For example, a heat medium warmed to a predetermined temperature by a heater is supplied from the fluid supply source to the load. Further, when a plurality of fluid circuits are independently provided, the heat exchanger is disposed between the plurality of fluid circuits to exchange heat between the fluid circuits so that the temperature of the heat medium flowing through the fluid circuit is adjusted and the thermal energy is efficiently used. Here, the heat medium is a medium that transfers heat, and is, for example, a heat transfer medium such as a cooling liquid used in a cooling circuit or an alternative CFC used in a heat pump.

For example, a heat exchanger of Patent Citation 1 is a thermal storage heat exchanger provided in an electric automobile to exchange heat between one fluid circuit which cools various heat sources such as power motors or inverters used to control the motors and the other fluid circuit which is a heat pump type air conditioner. In the thermal storage heat exchanger, a heat radiating portion communicating with a cooling liquid pipe forming a part of one fluid circuit, a heat receiving portion communicating with a heat medium pipe forming a part of the other fluid circuit, and a thermal storage material disposed between the heat radiating portion and the heat receiving portion are laminated as multiple layers to be unitized and the unit is covered with a heat insulating material.

The thermal storage heat exchanger causes the heat receiving portion to receive the waste heat of the cooling liquid which is the heat medium of one fluid circuit radiated from the heat radiating portion through the thermal storage material so that the heat medium of the other fluid circuit is warmed. Accordingly, for example, in a warm air operation mode of the air conditioner using the other fluid circuit, the temperature of the vehicle interior can be raised by the warm air operation mode of the air conditioner in such a manner that the heat medium of the other fluid circuit is warmed by the thermal storage heat exchanger even when it is difficult to warm the heat medium by the outdoor heat exchanger of the heat pump such as when the outside air temperature is below - 10°C.

### {CITATION LIST}

### {Patent Literature}

Patent Citation 1: JP 2020-79679 A (Page 7, FIG. 3)

### {SUMMARY OF INVENTION}

### {Technical Problem}

In the thermal storage heat exchanger of Patent Citation 1, since heat can be stored in the thermal storage material, the heat medium of the other fluid circuit can be kept warm for a long time and the vehicle interior can be warmed immediately by using the heat medium kept warm at the time of starting the air conditioner. However, since this is a configuration in which a thermal storage portion is disposed between the heat radiating portion and the heat receiving portion, there is concern that the thermal storage heat exchanger becomes large.

The present invention has been made in view of such problems and an object of the present invention is to provide a thermal storage heat exchanger capable of keeping a heat medium warm or cold for a long time and having a compact structure.

### {Solution to Problem}

In order to solve the foregoing problem, a thermal storage heat exchanger according to the present invention is a thermal storage heat exchanger for warming or cooling a heat medium in a first pipe by exchanging heat between the first pipe forming a part of a first fluid circuit and a second pipe forming a part of a second fluid circuit, wherein the first pipe and the second pipe have a nested structure, and wherein the thermal storage heat exchanger, includes: a first upstream valve configured for opening and closing an inlet port of the first pipe; and a first downstream valve configured for opening and closing an outlet port of the first pipe. According to the aforesaid feature of the present invention, since the heat medium in the first pipe is blocked from the heat medium in the pipes on the upstream and downstream sides of the first pipe in the first fluid circuit due to the closing of the first upstream valve and the first downstream valve and the first pipe and the second pipe have a nested structure, the overlapping region between the heat medium of the first pipe and the heat medium of the second pipe is large and the heat capacity of this region is large. Accordingly, the thermal storage heat exchanger can keep the heat medium in the first pipe warm or cold for a long time with a compact structure.

It may be preferable that the first pipe is disposed inside the second pipe. According to this preferable configuration, since the first pipe is disposed inside the second pipe, the heat transfer between the first pipe and the outer space on the outer radial side of the second pipe can be suppressed, fluctuation in enthalpy of the heat medium in the first pipe is small, and the heat retention or cold retention is excellent.

It may be preferable that the thermal storage heat exchanger further includes heat insulator is disposed to cover an outer peripheral surface of the second pipe. According to this preferable configuration, it is possible to suppress the heat transfer between the outer space and the second pipe.

It may be preferable that the heat insulator is constituted by a vacuum space formed on an outer periphery of the second pipe. According to this preferable configuration, since the outer space and the second pipe are vacuum-insulated, the heat insulating performance is high.

It may be preferable that the first upstream valve and the first downstream valve have a heat insulating structure. According to this preferable configuration, it is possible to increase the heat insulating performance between the heat medium in the first pipe and the heat medium in the pipes on the upstream and downstream sides of the first pipe in the first fluid circuit.

It may be preferable that the thermal storage heat exchanger further includes: a second upstream valve configured for opening and closing an inlet port of the second pipe; and a second downstream valve configured for opening and closing an outlet port of the second pipe. According to this preferable configuration, since it is possible to confine the high-temperature or low-temperature heat medium in the second pipe by the second upstream valve and the second downstream valve, the heat retention or cold retention of the heat medium in the first pipe exchanging heat with the heat medium in the second pipe is excellent.

It may be preferable that the thermal storage heat exchanger further includes: a bypass flow path which connects an upstream side of the second upstream valve and a downstream side of the second downstream valve. According to this preferable configuration, it is possible to maintain a state in which the heat medium is circulated in the second fluid circuit by the bypass flow path even when the second upstream valve and the second downstream valve are closed.

### {BRIEF DESCRIPTION OF DRAWINGS}

FIG. 1 is a schematic diagram illustrating a heat management system including a thermal storage heat exchanger according to a first embodiment of the present invention.
FIG. 2 is a schematic cross-sectional view illustrating the thermal storage heat exchanger from the front side in the first embodiment.
FIG. 3 is a cross-sectional view taken along a line A-A of FIG. 2.
FIG. 4 is a schematic cross-sectional view illustrating a connection mode between the thermal storage heat exchanger and a first downstream valve in the first embodiment.
FIGS. 5A to 5D are explanatory diagrams illustrating an example of a series of flows for starting a vehicle in a low temperature environment in the first embodiment.
FIG. 6 is a schematic cross-sectional view illustrating a thermal storage heat exchanger according to a second embodiment of the present invention.
FIG. 7 is a cross-sectional view taken along a line B-B of FIG. 6.

### {DESCRIPTION OF EMBODIMENTS}

Modes for carrying out a thermal storage heat exchanger according to the present invention will be described below on the basis of the embodiments. In addition, a heat medium is a heat transfer medium that transfers heat. Hereinafter, in the following embodiments, a cooling liquid used in a cooling circuit and an alternative CFC used in a heat pump will be described as examples of the heat medium.

### {First embodiment}

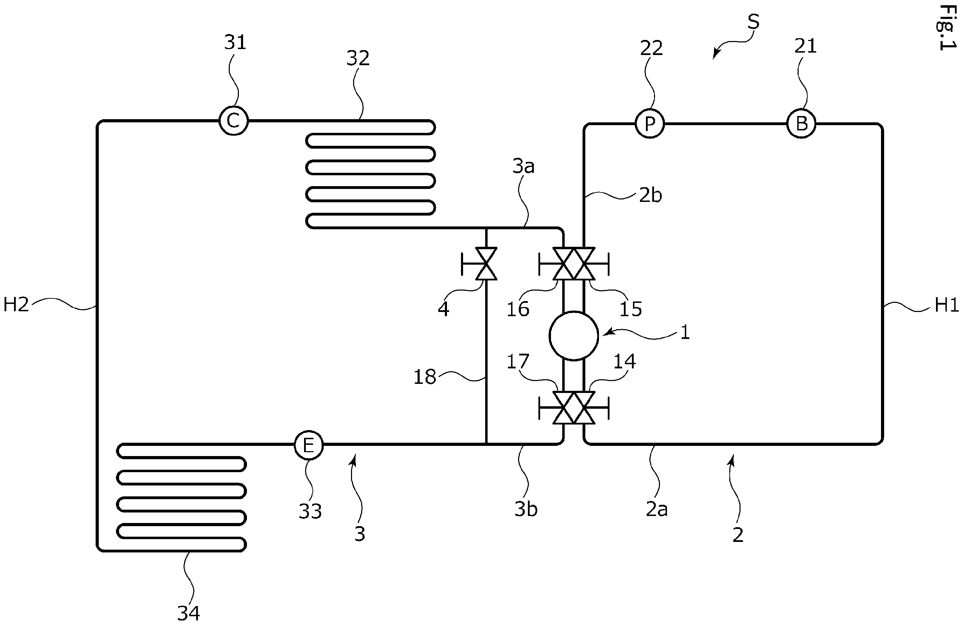

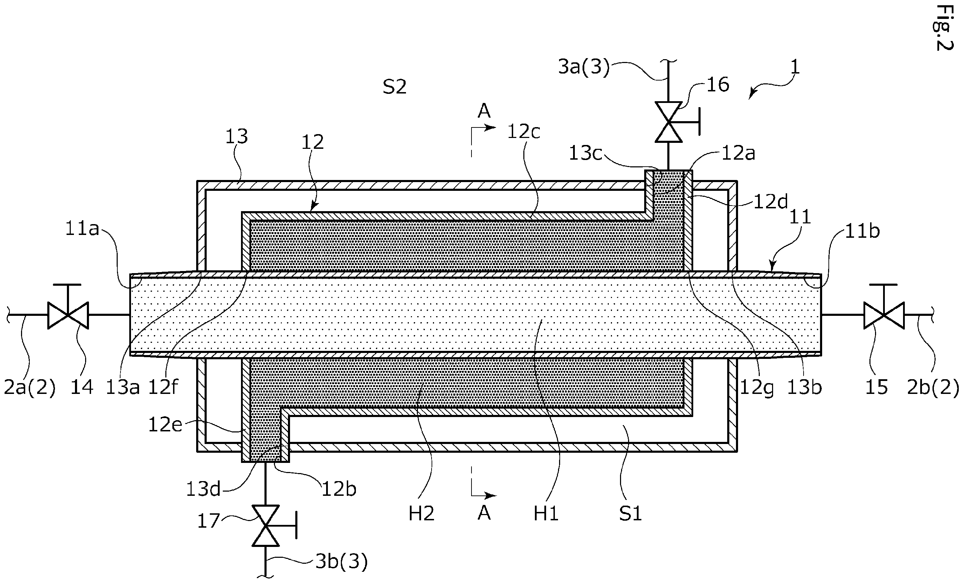

A thermal storage heat exchanger according to a first embodiment of the present invention will be described with reference to FIGS. 1 to 5. Hereinafter, a description will be made on the assumption that the front side of the paper surface of FIG. 2 is the front side (forward side) of the thermal storage heat exchanger and the right and left sides when viewed from the front side are the right and left sides of the thermal storage heat exchanger.

The thermal storage heat exchanger of the present invention exchanges heat between one fluid circuit and the other fluid circuit to warm or cool a heat medium in the one fluid circuit. In this embodiment, a thermal storage heat exchanger 1 incorporated in a heat management system S mounted on an electric automobile will be described. Additionally, the thermal storage heat exchanger may be applied to automobiles other than electric automobiles, general industrial machines, and the like.

As illustrated in FIG. 1, the heat management system S of this embodiment includes a first fluid circuit 2 which serves as one fluid circuit, a second fluid circuit 3 which serves as the other fluid circuit, and the thermal storage heat exchanger 1 of the present invention which exchanges heat between the first fluid circuit 2 and the second fluid circuit 3.

The first fluid circuit 2 of the first embodiment is a system for warming a battery 21 of an electric automobile. Specifically, the first fluid circuit 2 includes a pump 22, the battery 21, and the thermal storage heat exchanger 1. The pump 22 and the battery 21 are connected by a pipe, the battery 21 and the thermal storage heat exchanger 1 are connected by a pipe, and the thermal storage heat exchanger 1 and the pump 22 are connected by a pipe to form an endless shape.

A heat medium H1 such as LLC (Long Life Coolant) is enclosed in the first fluid circuit 2. The heat medium H1 is circulated clockwise in the first fluid circuit 2 by the pump 22.

The second fluid circuit 3 of the first embodiment is a heat pump system which supplies cool air and warm air in an electric automobile. Specifically, the second fluid circuit 3 includes a compressor 31, an indoor heat exchanger 32, a thermal storage heat exchanger 1, an expansion valve 33, and an outdoor heat exchanger 34. The compressor 31 and the indoor heat exchanger 32 are connected by a pipe, the indoor heat exchanger 32 and the thermal storage heat exchanger 1 are connected by a pipe, the thermal storage heat exchanger 1 and the expansion valve 33 are connected by a pipe, the expansion valve 33 and the outdoor heat exchanger 34 are connected by a pipe, and the outdoor heat exchanger 34 and the compressor 31 are connected by a pipe to form an endless shape.

A heat medium H2 such as an alternative CFC is enclosed in the second fluid circuit 3. The heat medium H2 is circulated in the second fluid circuit 3 by the compressor 31. Further, the second fluid circuit 3 includes a switching circuit (not illustrated) and the switching circuit can switch the flow direction of the heat medium H2 to clockwise or counterclockwise in FIG. 1. When the flow of the heat medium H2 is switched clockwise in FIG. 1, a warm air operation mode of supplying warm air is selected and when the flow of the heat medium H2 is switched counterclockwise in FIG. 1, a cool air operation mode of supplying cool air is selected. In this embodiment, the warm air operation mode will be mainly described.

Additionally, in this embodiment, although the battery warming system and the heat pump system mounted on the electric automobile have been described as an example of one fluid circuit and the other fluid circuit, the present invention is not limited thereto and one fluid circuit and the other fluid circuit can be freely changed. It is preferable that one of the fluid circuits cool the load and the other fluid circuit warm the load.

Next, the structure of the thermal storage heat exchanger 1 will be described with reference to FIGS. 2 to 4.

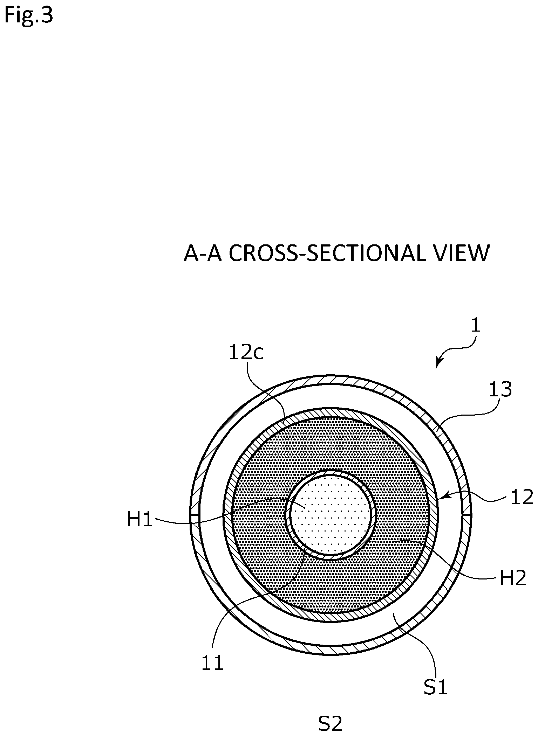

As illustrated in FIGS. 2 and 3, the thermal storage heat exchanger 1 includes a first pipe 11, a second pipe 12, a heat insulating pipe 13, a first upstream valve 14, a first downstream valve 15, a second upstream valve 16, a second downstream valve 17, and a bypass pipe 18 (see FIG. 1) which serves as a bypass flow path.

The first pipe 11 is a straight pipe made of metal with high thermal conductivity and high mechanical strength, such as aluminum and copper, and extends in the right and left direction. The left end portion of the first pipe 11 is provided with an inlet port 11a and the right end portion thereof is provided with an outlet port 11b.

A pipe 2a which extends from the battery 21 of the first fluid circuit 2 is connected to the left end portion of the first pipe 11 through the first upstream valve 14. A pipe 2b which extends from the pump 22 of the first fluid circuit 2 is connected to the right end portion of the first pipe 11 through the first downstream valve 15. In other words, the first pipe 11 forms a part of the first fluid circuit 2.

The second pipe 12 is a pipe made of metal with high thermal conductivity and high mechanical strength, such as aluminum and copper. The second pipe 12 includes a straight pipe portion 12c which extends in the right and left direction, an upstream connecting pipe portion 12d which extends radially outward from a right end portion of the straight pipe portion 12c, and a downstream connecting pipe portion 12e which extends radially outward from a left end portion of the straight pipe portion 12c. The second pipe 12 of this embodiment has a crank shape in which the upstream connecting pipe portion 12d and the downstream connecting pipe portion 12e extend opposite radial directions.

The straight pipe portion 12c is formed to have a diameter larger than that of the first pipe 11 and both right and left ends are provided with openings 12f and 12g. The first pipe 11 is inserted into the straight pipe portion 12c through the openings 12f and 12g. The inner peripheral surface of the straight pipe portion 12c forming the openings 12f and 12g and the outer peripheral surface of the first pipe 11 are hermetically fixed by welding or the like. Additionally, the first pipe 11 is longer than the straight pipe portion 12c and the right and left end portions thereof are arranged on the axial outside of the straight pipe portion 12c.

The upstream connecting pipe portion 12d is provided with an inlet port 12a and the downstream connecting pipe portion 12e is provided with the outlet port 11b.

Further, a pipe 3a which extends from the indoor heat exchanger 32 in second fluid circuit 3 is connected to the upstream connecting pipe portion 12d through the second upstream valve 16. A pipe 3b which extends from the expansion valve 33 in the second fluid circuit 3 is connected to the downstream connecting pipe portion 12e through the second downstream valve 17. In other words, the second pipe 12 forms a part of the second fluid circuit 3.

The heat insulating pipe 13 is a tubular body made of a metal with high thermal conductivity and high mechanical strength, such as aluminum or copper. The heat insulating pipe 13 has a diameter larger than those of the straight pipe portion 12c of the second pipe 12 and the first pipe 11. Further, the heat insulating pipe 13 is longer than the second pipe 12 in the axial direction and is shorter than the first pipe 11 in the axial direction.

Further, the heat insulating pipe 13 includes openings 13a and 13b through which both right and left end portions of the first pipe 11 are insertable and openings 13c and 13d through which the upstream connecting pipe portion 12d and the downstream connecting pipe portion 12e of the second pipe 12 are insertable.

The heat insulating pipe 13 is composed of split members that are divided in half in the radial direction, the split members are welded to each other, and each split member is welded to the first pipe 11 and the second pipe 12 to be hermetically fixed to the first pipe 11 and the second pipe 12.

The heat insulating pipe 13 is disposed to cover a part of the first pipe 11 and the outer peripheral surface of the second pipe 12. Accordingly, a vacuum space S1 is formed as a heat insulator around most of the first pipe 11 and substantially all of the second pipe 12. Additionally, the vacuum space mentioned herein indicates a space filled with a gas of a pressure lower than the normal atmospheric pressure.

Additionally, in this embodiment, although it has been exemplified that the first pipe 11, the second pipe 12, and the heat insulating pipe 13 are pipes made of metal with high mechanical strength, the mechanical strength may be low when the pressure of the heat medium is low.

The first upstream valve 14 can open and close the inlet port 11a of the first pipe 11, the first downstream valve 15 can open and close the outlet port 11b of the first pipe 11, the second upstream valve 16 can open and close the inlet port 12a of the second pipe 12, and the second downstream valve 17 can open and close the outlet port 12b of the second pipe 12. Since the first upstream valve 14 to the second downstream valve 17 have the same configuration, only the first downstream valve 15 will be described and the description of the other valves 14, 16, and 17 will be omitted.

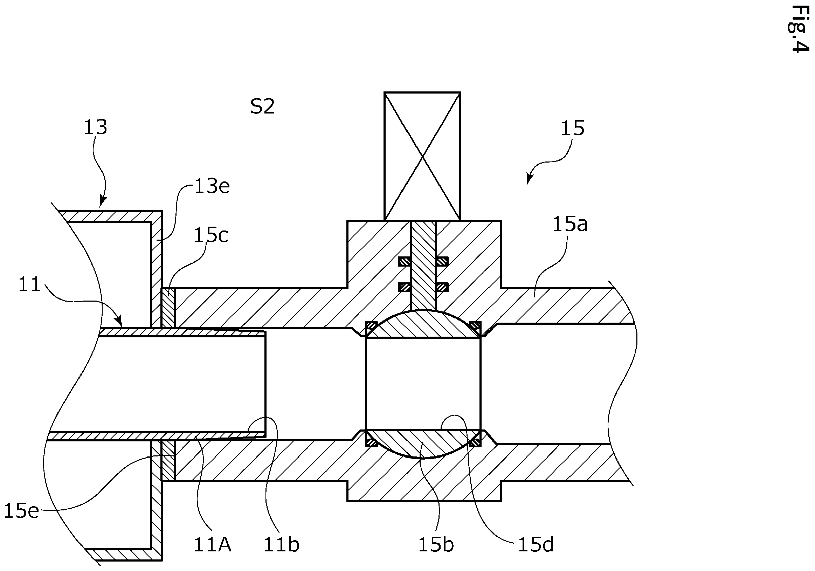

As illustrated in FIG. 4, the first downstream valve 15 is a ball valve capable of opening and closing the outlet port 11b of the first pipe 11. Specifically, the first downstream valve 15 mainly includes a valve housing 15a, a ball valve body 15b, and a gasket 15c.

The valve housing 15a is a tubular body made of a heat insulating material and opened in the right and left direction. The left end portion of the valve housing 15a is screwed and fixed to a portion 11A of the first pipe 11 which protrudes to the right from the heat insulating pipe 13. Additionally, the valve housing 15a may be reinforced by embedding a rigid core material such as metal. Further, the means for fixing the first downstream valve 15 to the first pipe 11 is not limited to screwing.

The ball valve body 15b includes a through-hole 15d which penetrates in the horizontal direction and is rotatably disposed in the valve housing 15a. The ball valve body 15b is operable from the outside of the valve housing 15a. When the through-hole 15d of the ball valve body 15b faces the right and left direction, the outlet port 11b is opened and when the through-hole 15d faces the front and rear direction, the circumferential edge of the through-hole 15d contacts a valve seat provided on the inner peripheral surface of the valve housing 15a to close the outlet port 11b.

The gasket 15c is made of an elastic member such as rubber. The gasket 15c is sandwiched between a left end surface 15e of the valve housing 15a and a right end surface 13e of the heat insulating pipe 13. Accordingly, it is possible to prevent the portion 11A of the first pipe 11 from being exposed to an outer space S2.

Returning to FIG. 1, the pipe 3a which connects the indoor heat exchanger 32 and the second upstream valve 16 is connected to the pipe 3b which connects the second downstream valve 17 and the expansion valve 33 by the bypass pipe 18. A bypass valve 4 which opens and closes the bypass pipe 18 is disposed in the middle of the bypass pipe 18.

Next, an example of the use state of the heat management system S will be described with reference to FIGS. 1 to 5. Here, a description will be made mainly assuming that the vehicle is started in a low temperature environment.

The heat management system S of this embodiment can store heat in the thermal storage heat exchanger 1 in a vehicle operation state in which a driving source and an auxiliary machine of the vehicle are operated when the vehicle is running and flow the high-temperature heat medium H1 to the battery 21 when the vehicle is started. Therefore, the startability of the battery 21 can be improved in a low temperature environment.

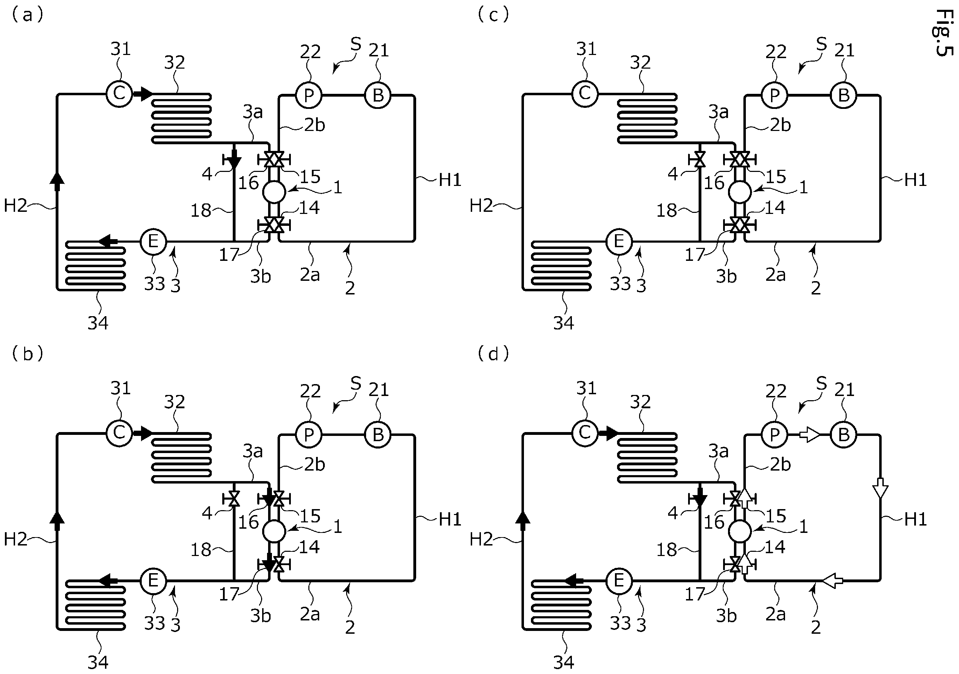

FIG. 5A illustrates an example when the vehicle is operated. In the vehicle operation state of FIG. 5A, the first upstream valve 14 and the first downstream valve 15 of the first fluid circuit 2 are closed and the pump 22 is stopped.

On the other hand, the bypass valve 4 of the second fluid circuit 3 is opened, the second upstream valve 16 and the second downstream valve 17 are closed, and the compressor 31 is operated. Therefore, the heat medium H2 circulates in the order of the compressor 31, the indoor heat exchanger 32, the bypass pipe 18, the expansion valve 33, and the outdoor heat exchanger 34 (that is, the second fluid circuit 3 is in the warm air operation mode).

Next, the process of storing heat in the thermal storage heat exchanger 1 will be described with reference to FIGS. 5B and 5C. The process of storing heat in the thermal storage heat exchanger 1 is performed by absorbing the heat of the second fluid circuit 3 to the first fluid circuit 2.

In the thermal storage process, if the temperature of the heat medium H1 is below a predetermined value when the operation end switch of the vehicle is operated, the first upstream valve 14 and the first downstream valve 15 are closed when these valves are opened, the pump 22 is stopped when the pump is operated, and the bypass valve 4 is closed when the bypass valve is opened. Further, the second fluid circuit 3 continues the warm air operation mode.

Specifically, as illustrated in FIG. 5B, when the operation end switch of the vehicle is operated from the state of FIG. 5A, the bypass valve 4 of the second fluid circuit 3 is closed and the second upstream valve 16 and the second downstream valve 17 are opened. Accordingly, the warm air operation mode by the second fluid circuit 3 is continued.

In this state, as illustrated in FIGS. 2 and 3, in the thermal storage heat exchanger 1, the heat medium H1 is confined in the first pipe 11 and the heat medium H2 flows in the second pipe 12. The heat medium H2 flowing into the second pipe 12 is the high-temperature heat medium H2 pressure-fed from the compressor 31 and is hotter than the heat medium H1 in the first pipe 11. Thus, heat is exchanged between the heat medium H1 and the heat medium H2.

Then, when the heat medium H1 is sufficiently warmed, the second upstream valve 16 and the second downstream valve 17 are closed, the bypass valve 4 is closed, and the compressor 31 is stopped as illustrated in FIG. 5C. Accordingly, the high-temperature heat medium H2 is confined in the second pipe 12 and the vehicle enters a non-operation state in which the drive motor is stopped and all auxiliary machines such as the first fluid circuit 2 and the second fluid circuit 3 are stopped. That is, the high-temperature heat medium H1 and the high-temperature heat medium H2 are confined in the first pipe 11 and the second pipe 12 and the thermal storage heat exchanger 1 is in a state of storing heat (see FIGS. 2 and 3).

The thermal storage state of the thermal storage heat exchanger 1 continues even after the vehicle is not operated. Specifically, since the heat capacity of the overlapping region between the high-temperature heat medium H1 and the high-temperature heat medium H2 is large and the outer space S2 is insulated from the vacuum space S1, the heat medium H1 is kept warm for a long time.

Then, when the vehicle start switch is operated and the vehicle is started, the first upstream valve 14 and the first downstream valve 15 are opened and the pump 22 is operated as illustrated in FIG. 5D. Accordingly, the heat medium H1 kept at a high temperature even immediately after starting the vehicle can be supplied to the battery 21 of the first fluid circuit 2 to be immediately warmed. Additionally, only when the temperature of the battery 21 is lower than a predetermined temperature, the first upstream valve 14 and the first downstream valve 15 may be opened and the pump 22 may be operated.

Further, the warm air operation mode by the second fluid circuit 3 is selected in such a manner that the bypass valve 4 of the second fluid circuit 3 is opened, the second upstream valve 16 and the second downstream valve 17 are closed, and the compressor 31 is operated at a vehicle start timing. Accordingly, since the heat medium H2 kept at a high temperature is supplied to the second fluid circuit 3, the operation state of the warm air operation mode of the second fluid circuit 3 is early stabilized.

Additionally, in this embodiment, although it has been exemplified that the thermal storage process of the thermal storage heat exchanger 1 is performed if the temperature of the heat medium H1 is below a predetermined value when the operation end switch of the vehicle is operated, the thermal storage process of the thermal storage heat exchanger 1 may be performed if the outside air temperature is below a predetermined value when the operation end switch of the vehicle is operated.

Further, the thermal storage process of the thermal storage heat exchanger 1 may be necessarily performed when the operation end switch of the vehicle is operated regardless of the outside air temperature or the temperature of the heat medium H1. Further, the present invention is not limited to the example in which the thermal storage process is performed when the operation end switch of the vehicle is operated and the thermal storage process may be performed when the vehicle is driven.

As described above, the first pipe 11 forming a part of the first fluid circuit 2 and the second pipe 12 forming a part of the second fluid circuit 3 have a nested structure and the first upstream valve 14 capable of opening and closing the inlet port 11a of the first pipe 11 and the first downstream valve 15 capable of opening and closing the outlet port 11b of the first pipe 11 are provided.

Accordingly, since the heat medium H1 in the first pipe 11 is blocked from the heat medium in the upstream pipe 2a and the downstream pipe 2b in relation to the first pipe 11 in the first fluid circuit 2 due to the closing of the first upstream valve 14 and the first downstream valve 15 and the first pipe 11 and the second pipe 12 have a nested structure, the overlapping region between the heat medium H1 of the first pipe 11 and the heat medium H2 of the second pipe 12 is large and the heat capacity of this region is large. Accordingly, the thermal storage heat exchanger 1 can keep the heat medium H1 in the first pipe 11 warm for a long time with a compact structure without using a special thermal storage material.

Further, since the first pipe 11 is disposed inside the second pipe 12, the heat transfer between the first pipe 11 and the outer space S2 on the outer radial side of the second pipe 12 can be suppressed, fluctuation in enthalpy of the heat medium H1 in the first pipe 11 is small, and the heat retention is excellent.

Further, since the heat insulator for covering the outer peripheral surface of the second pipe 12 is provided, the heat transfer between the outer space S2 and the second pipe 12 can be suppressed.

Further, since the heat insulator is the vacuum space S1 formed on the outer periphery of the second pipe 12 and the outer space S2 and the second pipe 12 are vacuum-insulated, the heat insulating performance is high.

Further, the first upstream valve 14 and the first downstream valve 15 have a heat insulating structure. Specifically, since the first upstream valve 14 and the first downstream valve 15 include the valve housing 15a made of a heat insulating material, it is possible to increase the heat insulating performance between the heat medium H1 in the first pipe 11 and the heat medium in the pipes 2a and 2b on the upstream and downstream sides of the first pipe 11 in the first fluid circuit 2.

Further, since the gasket 15c is sandwiched between the left end surface 15e of the valve housing 15a and the right end surface 13e of the heat insulating pipe 13 so that the first pipe 11 is not exposed to the outer space S2, the heat insulating performance is high.

Further, the second upstream valve 16 capable of opening and closing the inlet port 12a of the second pipe 12 and the second downstream valve 17 capable of opening and closing the outlet port 12b of the second pipe 12 are provided. Accordingly, since the high-temperature heat medium H2 can be confined in the second pipe 12 by the second upstream valve 16 and the second downstream valve 17, the heat retention of the heat medium H1 in the first pipe 11 that exchanges heat with the heat medium H2 in the second pipe 12 is excellent.

Further, since the second upstream valve 16 and the second downstream valve 17 include a valve housing made of a heat insulating material, it is possible to increase the heat insulating performance between the heat medium H2 in the second pipe 12 and the heat medium in the pipes 3a and 3b on the upstream and downstream sides of the second pipe 12 in the second fluid circuit 3.

Further, since the bypass pipe 18 which connects the pipe 3a on the upstream side of the second upstream valve 16 and the pipe 3b on the downstream side of the second downstream valve 17 is provided, it is possible to maintain a state in which the heat medium H2 is circulated in the second fluid circuit 3 by the bypass pipe 18, that is, the second fluid circuit 3 is operated even when the second upstream valve 16 and the second downstream valve 17 are closed.

Further, the bypass valve 4 is provided in the bypass pipe 18 and a sufficient flow rate of the heat medium H2 to the second pipe 12 can be ensured by closing the bypass pipe 18.

### {Second embodiment}

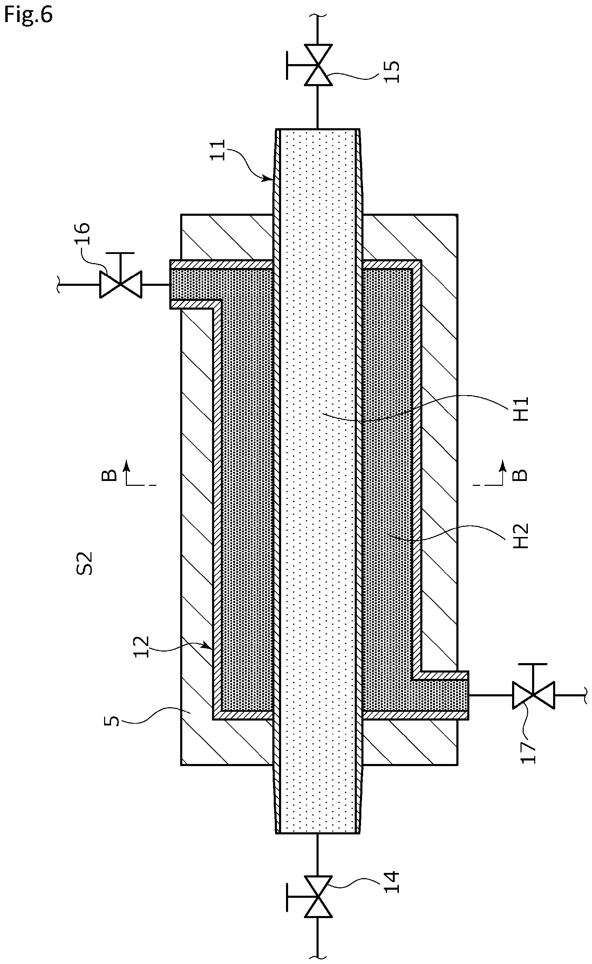

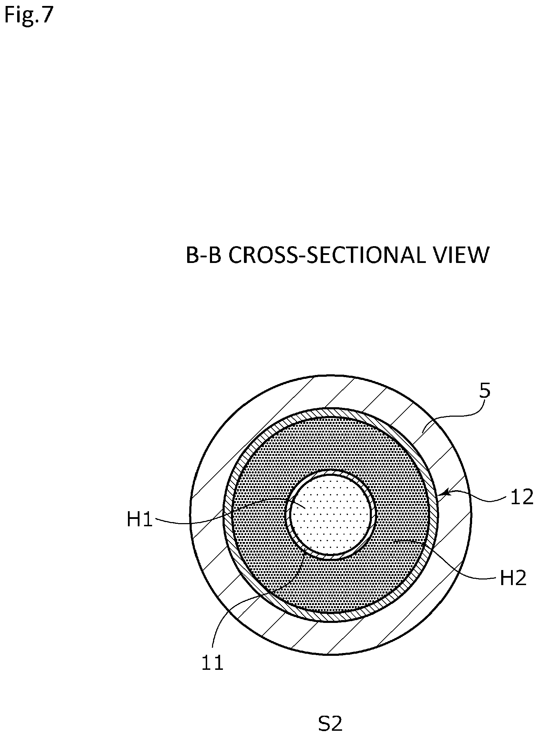

Next, a thermal storage heat exchanger according to a second embodiment of the present invention will be described with reference to FIGS. 6 and 7. Additionally, the description of the same configuration as that of the first embodiment will be omitted.

As illustrated in FIGS. 6 and 7, the heat insulator of the second embodiment is a heat insulating material 5 made of nitrile rubber, polystyrene, or the like. The heat insulating material 5 is disposed to cover the axial center portion of the first pipe 11 and the entire outer periphery of the second pipe 12.

The heat insulating material 5 may be formed in, for example, a sheet shape and may be attached by wrapping the heat insulating material 5 around the outer peripheries of the first pipe 11 and the second pipe 12. Further, the heat insulating material 5 may be sprayed to the outer peripheries of the first pipe 11 and the second pipe 12 to be fixed thereto. Further, the heat insulating material 5 may be composed of a plurality of split bodies and may be externally fitted to the outer peripheries of the first pipe 11 and the second pipe 12.

In this way, since the heat insulating material 5 which covers the outer periphery of the second pipe 12 is provided, it is possible to suppress the heat transfer between the outer space S2 and the second pipe 12. Further, it is possible to easily perform the heat insulating just by attaching the heat insulating material 5 to the outer peripheries of the first pipe 11 and the second pipe 12.

Although the embodiments of the present invention have been described above with reference to the drawings, the specific configuration is not limited to these examples, and any changes or additions that do not depart from the scope of the present invention are included in the present invention.

For example, in the above-described first and second embodiments, although the nested structure in which the first pipe and the second pipe are double pipes has been exemplified, it is not necessary to be a double pipe as long as a part of the other pipe is disposed in one pipe. For example, a part of the other pipe may be disposed within one pipe and another part of the other pipe may be disposed outside the one pipe. Further, the pipe wall of one pipe may be used as a part of the pipe wall of the other pipe.

Further, in the above-described first and second embodiments, the center of the first pipe and the center of the second pipe may not be concentric double pipes. For example, the first pipe and the second pipe may be arranged so that the center positions are different.

Further, in the above-described first and second embodiments, although it has been exemplified that the first pipe is disposed inside the second pipe, the second pipe may be disposed inside the first pipe.

Further, in the above-described first and second embodiments, although it has been exemplified that the heat medium of the first pipe is warmed by the heat medium of the second pipe, the heat medium of the first pipe may be cooled by the heat medium of the second pipe. In this case, the battery can be cooled by the cooled heat medium.

Further, in the above-described first and second embodiments, although the thermal storage heat exchanger which exchanges heat between two fluid circuits has been described, heat may be exchanged between three or more fluid circuits. In this case, each pipe forming a part of each fluid circuit may be disposed in a nested shape or a plurality of pipes may be arranged independently in one pipe. Further, one or a plurality of fluid circuits may be used to warm or cool the heat medium.

Further, in the above-described first and second embodiments, it has been exemplified that the first upstream valve, the first downstream valve, the second upstream valve, and the second downstream valve are ball valves, other valves may be used.

Further, in the above-described first and second embodiments, although it has been exemplified that the second upstream valve and the second downstream valve capable of confining the high-temperature heat medium in the second pipe are provided, the present invention is not limited thereto and the configurations of the second upstream valve and the second downstream valve may be omitted. In this case, the configuration of the bypass flow path can be also omitted.

Further, in the above-described first and second embodiments, although it has been exemplified that the heat medium of the first pipe in a confined state exchanges heat with the heat medium of the second pipe, the present invention is not limited thereto and the heat medium may be confined in the first pipe when the entire heat medium of one fluid circuit is appropriately warmed or cooled without stopping the flow of one fluid circuit.

Further, in the above-described first and second embodiments, although it has been exemplified that the heat insulator is provided to cover the outer peripheries of the first pipe and the second pipe, the configuration of the heat insulator may be omitted when the heat capacity of the overlapping region between the first pipe and the second pipe is sufficient.

### {REFERENCE SIGNS LIST}

- 1: Thermal storage heat exchanger
- 2: First fluid circuit
- 3: Second fluid circuit
- 4: Bypass valve
- 5: Heat insulating material (heat insulator)
- 11: First pipe
- 11a: Inlet port
- 11b: Outlet port
- 12: Second pipe
- 12a: Inlet port
- 12b: Outlet port
- 13: Heat insulating pipe
- 14: First upstream valve
- 15: First downstream valve
- 16: Second upstream valve
- 17: Second downstream valve
- 18: Bypass pipe (bypass flow path)
- 21: Battery (load)
- H1, H2: Heat medium
- S: Heat management system
- S1: Vacuum space (heat insulator)
- S2: Outer space

## Claims

1. A thermal storage heat exchanger for warming or cooling a heat medium in a first pipe by exchanging heat between the first pipe forming a part of a first fluid circuit and a second pipe forming a part of a second fluid circuit,
wherein the first pipe and the second pipe have a nested structure, and
wherein the thermal storage heat exchanger, comprises:
a first upstream valve configured for opening and closing an inlet port of the first pipe; and
a first downstream valve configured for opening and closing an outlet port of the first pipe.

2. The thermal storage heat exchanger according to claim 1,
wherein the first pipe is disposed inside the second pipe.

3. The thermal storage heat exchanger according to claim 2, further comprising:
A heat insulator disposed to cover an outer peripheral surface of the second pipe.

4. The thermal storage heat exchanger according to claim 3,
wherein the heat insulator is constituted by a vacuum space formed on an outer periphery of the second pipe.

5. The thermal storage heat exchanger according to claim 1,
wherein the first upstream valve and the first downstream valve have a heat insulating structure.

6. The thermal storage heat exchanger according to any one of claims 1 to 5, further comprising:
a second upstream valve configured for opening and closing an inlet port of the second pipe; and
a second downstream valve configured for opening and closing an outlet port of the second pipe.

7. The thermal storage heat exchanger according to claim 6, further comprising:
a bypass flow path which connects an upstream side of the second upstream valve and a downstream side of the second downstream valve.
